# EUROPÄISCHE PATENTSCHRIFT

(11) **EP 1 091 636 B1**
(45) Veröffentlichungstag und Bekanntmachung des Hinweises auf die Patenterteilung: **17.07.2002**
(21) Anmeldenummer: 99929147.9
(22) Anmeldetag: 08.06.1999
(51) Int. Cl.: A01F 15/10

(54) **AUFSAMMELPRESSE FÜR LANDWIRTSCHAFTLICHES ERNTEGUT**
PICK-UP BALER FOR HARVESTED AGRICULTURAL PRODUCE
PRESSE-RAMASSEUSE POUR PRODUIT DE RECOLTE AGRICOLE

(30) Priorität: 01.07.1998 DE 19829276
(43) Veröffentlichungstag der Anmeldung: 18.04.2001
(73) Patentinhaber: Maschinenfabrik Bernard Krone GmbH, 48480 Spelle (DE)
(72) Erfinder: KRONE, Bernard, D-48480 Spelle (DE); WEDDELING, Otger, D-33428 Harsewinkel (DE); STEGLICH, Christian, D-49832 Freren (DE); WERNSMANN, Thomas, D-48282 Emsdetten (DE)
(74) Vertreter: Busse & Busse Patentanwälte
(86) Internationale Anmeldenummer: EP9903926
(87) Internationale Veröffentlichungsnummer: WO0001215

(56) Entgegenhaltungen:
- EP-A- 0 870 425
- DE-A- 4 111 985
- DE-A- 4 219 490
- DE-A- 19 531 240
- FR-A- 2 346 963

## Beschreibung

Die Erfindung betrifft eine Aufsammelpresse für landwirtschaftliches Erntegut nach dem Oberbegriff des Anspruchs 1.

In der DE 195 31 240 A1 wird eine derartige Presse beschrieben, bei der ein Rotorförderer vom Boden aufgenommenes Erntegut durch einen Förderkanal in einen Preßkanal fördert, indem einzelne Rechen, die um eine Rotordrehachse rotieren und um eigene, zur Rotordrehachse parallele Rechenachsen verschwenkbar angeordnet sind, das Erntegut zunächst im Förderkanal ansammeln und schließlich durch eine Zubringerbewegung eines Rechens in den Preßkanal hineinschieben. Die für das Fördern und die Zubringerbewegung notwendige Verschwenkung der Rechen wird dadurch verwirklicht, daß die Rechen in einer verschwenkbaren Kurvenbahn geführt sind, deren Grad der Verschwenkung festlegt, ob die Rechen lediglich eine Förderbewegung, oder eine Zubringerbewegung ausführen. Die Verschwenkung der Kurvenbahn ist über einen Sensor zur Erfassung der geförderten Menge an Erntegut derart steuerbar, daß die Zubringerbewegung nur ausgeführt wird, wenn eine ausreichende Menge Erntegut im Zubringerkanal vorhanden ist. Die Qualität sowohl des Förderns, als auch des Zubringens ist dabei im wesentlichen von den von den jeweiligen Rechen ausgeführten Verschwenkbewegungen abhängig, wobei eine optimierte Bewegung der Rechen in der Förderfunktion sich von einer optimierten Bewegung in der Zubringerfunktion erheblich unterscheidet, Da bei der bekannten Presse jedoch sowohl die Verschwenkung der Rechen für die Förderfunktion als auch die Verschwenkung der Rechen für die Zubringerfunktion durch dieselbe Kurvenbahn gelenkt werden, kann diese stets nur einen Kompromiß zwischen den für optimale Bewegung der Rechen zum Fördern und des Zubringerrechens erforderlichen Führungen darstellen.

Die Erfindung befaßt sich daher mit dem Problem, eine Aufsammelpresse anzugeben, die sowohl hinsichtlich ihrer Förderfunktion, als auch hinsichtlich ihrer Zubringerfunktion besser an die jeweilige Ausgestaltung der Presse, insbesondere des Zubringerkanals und des Übergangsbereiches zum Preßkanal, aber auch an das zu verpressende Erntegut angepaßt ausführbar sein kann.

Dieses Problem wird durch eine Aufsammelpresse mit den Merkmalen des Anspruchs 1 gelöst.

Dadurch, daß Zubringerrechen und Förderrechen in unterschiedlichen Kurvenbahnen geführt sind, können diese Kurvenbahnen der Hauptfunktion des jeweiligen Rechens optimal angepaßt werden, wobei die die Förderrechen lenkende Kurvenbahn unbeweglich ausgeführt ist und lediglich die den Zubringerrechen lenkende Kurvenbahn bewegbar ausgeführt sein muß, damit der Zubringerrechen von der Förderfunktion in die Zubringerfunktion überführbar ist.

Weitere Vorteile und Einzelheiten ergeben sich aus den Unteransprüchen und einem in der Zeichnung dargestellten Ausführungsbeispiel der Erfindung, das im folgenden beschrieben wird; es zeigen:
- Fig. 1: schematisch die Seitenansicht einer erfindungsgemäßen Aufsammelpresse,
- Fig. 2: den Rotorförderer der Aufsammelpresse im Schnitt,
- Fig. 3: eine perspektivische Teildarstellung des Rotorförderers,
- Fig. 4: eine andere Ansicht des Gegenstands aus Fig. 3,
- Fig. 5: einen Schnitt entlang der Fläche V-V in Fig. 4,
- Fig. 6: eine rückwärtige Ansicht des Zubringerkanals mit Rotorförderer der Aufsammelpresse,
- Fig. 7: eine vergrößerte Darstellung des Ausschnitts VII in Fig. 6,
- Fig. 8 a - f: den Bewegungsablauf des Zubringerrechens in Förderstellung und
- Fig. 9 a - f: den Bewegungsablauf des Zubringerrechens in Zubringerstellung.

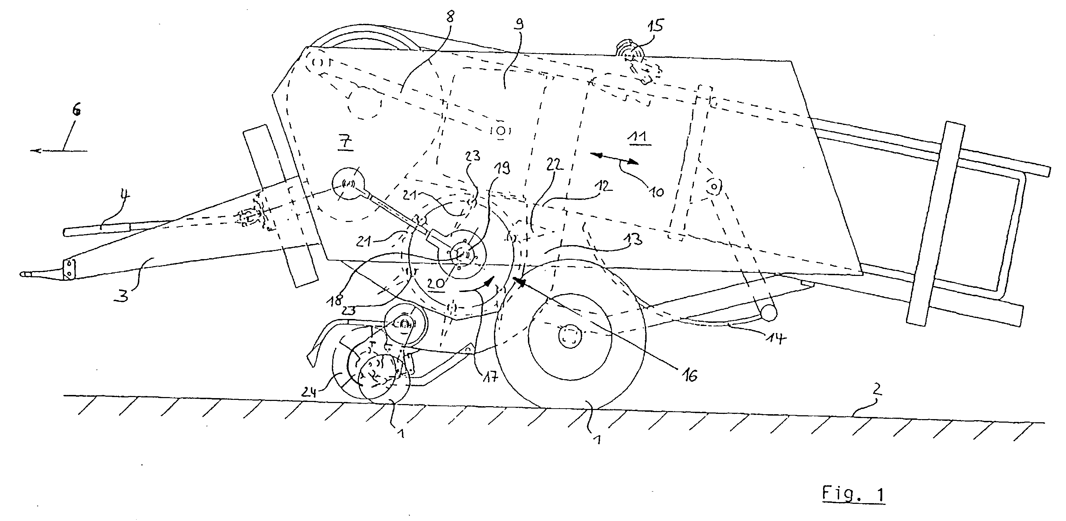

Die in Fig. 1 dargestellte Aufsammelpresse stützt sich mit Rädern auf dem Boden 2 ab und kann über eine Deichsel 3 mit einem landwirtschaftlichen Zugfahrzeug verbunden werden. Die Fahrtrichtung des Zugfahrzeugs ist durch einen Pfeil 6 angedeutet. Die Aufsammelkolbenpresse kann jedoch auch als selbstfahrendes, selbsttätig angetriebenes landwirtschaftliches Fahrzeug ausgestaltet sein. Die dargestellte Ausführungsform wird von der Zapfwelle des Zugfahrzeugs über eine Gelenkwelle 4 angetrieben. Dieser Antrieb wird über ein Hauptgetriebe 7 und einen Kurbeltrieb 8 auf einen Preßkolben 9 übertragen, der sich in Richtung des Doppelpfeiles 10 in einem Preßkanal 11 hin- und herbewegt und so durch eine Preßkanaleinlaßöffnung 12 aus einem Zubringerkanal 13 zugeführtes Erntegut zu einem Ballen verdichtet, der dann durch angedeutete Bindenadeln 14 und Knoter 15 mit Bindematerial umbunden wird.

Über das Hauptgetriebe 7 wird zudem der Rotor 16 in Richtung des Pfeiles 17 drehend angetrieben. Der Rotor 16 besteht aus zwei beidseits mit einer um eine Rotordrehachse 18 drehbar gelagerten Rotorwelle 19 verbundenen Rotorscheiben 20, in denen Rechen 21, 22 um ihre Rechenachsen 23 schwenkbar gelagert sind. Sie fördern von einer als Pick-up 24 bezeichneten Vorrichtung vom Boden aufgenommenes Erntegut, beispielsweise Stroh, Heu oder angewelktes Grüngut durch den Zubringerkanal 13.

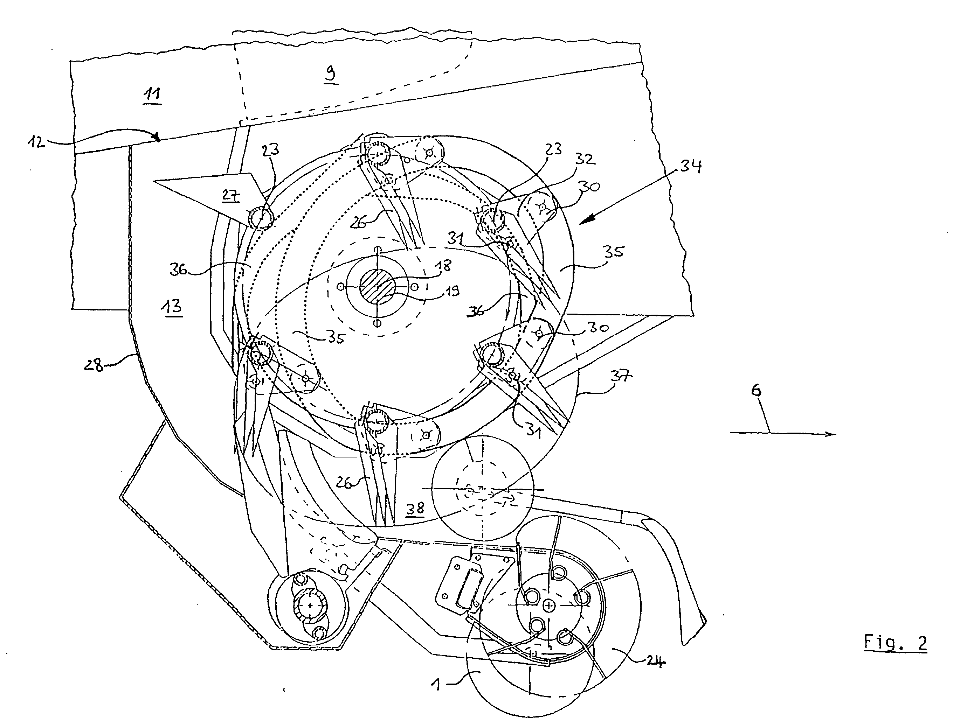

Wie die Fig. 2 bis 5 zeigen, werden die Rechen 21, 22 durch an Querträgern 25 befestigten Zinken 26, 27 gebildet, die an den Querträgern 25 über die gesamte Breite des Zubringerkanals 13 nebeneinander angeordnet sind. Der Zubringerkanal 13 hat eine im wesentlichen durchgehende äußere Wandung 28 und eine dem Rotor 16 zugewandte innere Wandung, die durch voneinander beabstandete Profilbleche 29 gebildet wird. Diese sind derart in den Lücken zwischen den Zinken 26, 27 angeordnet, daß der Zubringerkanal 13 von den Zinken 26, 27 durchgriffen werden kann.

Um die Verschwenkungsbewegung der Rechen 21, 22 lenken zu können, sind die Querträger 25 über die Rotorscheiben 20 einseitig hinaus verlängert und weisen am verlängerten Bereich fest mit dem Querträger 25 verbundene mit Steuerrollen 30, 31 versehene Steuerplatten 32 auf. Der dargestellte Rotorförderer besitzt sechs Rechen 21, 22, von denen fünf als reine Förderrechen 21 ausgebildet sind und einer darüber hinaus als Zubringerrechen 22 dient.

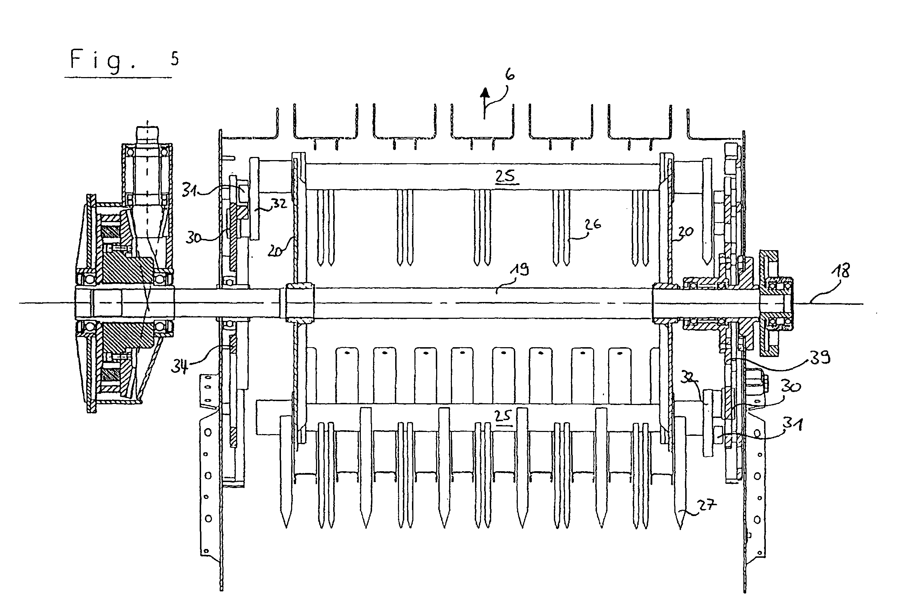

Wie insbesondere in den Fig. 2 und 5 erkennbar ist, sind die Steuerrollen 30, 31 der Förderrechen 21 in Fahrtrichtung 6 linksseitig der linken Rotorscheibe 20 in einer fest mit dem Gehäuse 33 verbundenen Kurvenbahn 34 geführt. Um eine für die Förderbewegung günstige Bewegung der Förderrechen 21 zu erreichen, ist die Kurvenbahn 34 mehrteilig ausgebildet, und weist einen breiten Kanal 35 auf, in dem die größere der beiden Steuerrollen 30 geführt ist und einen schmaleren Kanal 36 in dem bereichsweise die kleinere der beiden Steuerrollen 31 die Führung übernimmt. So gelingt es, daß die Spitzen der Zinken 26 der Förderrechen 21 bei einer Drehung des Rotors 16 die in Fig. 2 dargestellte Hüllkurve 37 beschreiben. Diese Förderbewegung ist besonders günstig, da sie das von der Pick-up 24 übergebene Erntegut schnell aus dem Eingangsbereich 38 des Zubringerkanals 13 herausbefördert, im weiteren Verlauf des Zubringerkanals 13 jedoch keine zu starke Verdichtung des Erntegutes bewirkt.

Der Querträger 25 des Zubringerrechens 22 hingegen ist zur anderen, in Fahrtrichtung 6 linken Seite durch die linke Rotorscheibe 20 hindurch verlängert und ebenso mit einer Steuerplatte 32 und Steuerrollen 30, 31 ausgestattet. Diese Steuerrollen 30, 31 verlaufen in einer ebenfalls mehrteilig ausgebildeten Kurvenbahn 39, welche wie auch die unbewegliche Kurvenbahn 34 einen breiten Kanal 40 und für die große Steuerrolle 30 und einen schmalen Kanal 41 für die kleinere Steuerrolle 31 aufweist. im Gegensatz zur festen Kurvenbahn 34 ist die Kurvenbahn 39 jedoch bewegbar, indem sie um die Rotordrehachse 18 schwenkbar gelagert ist.

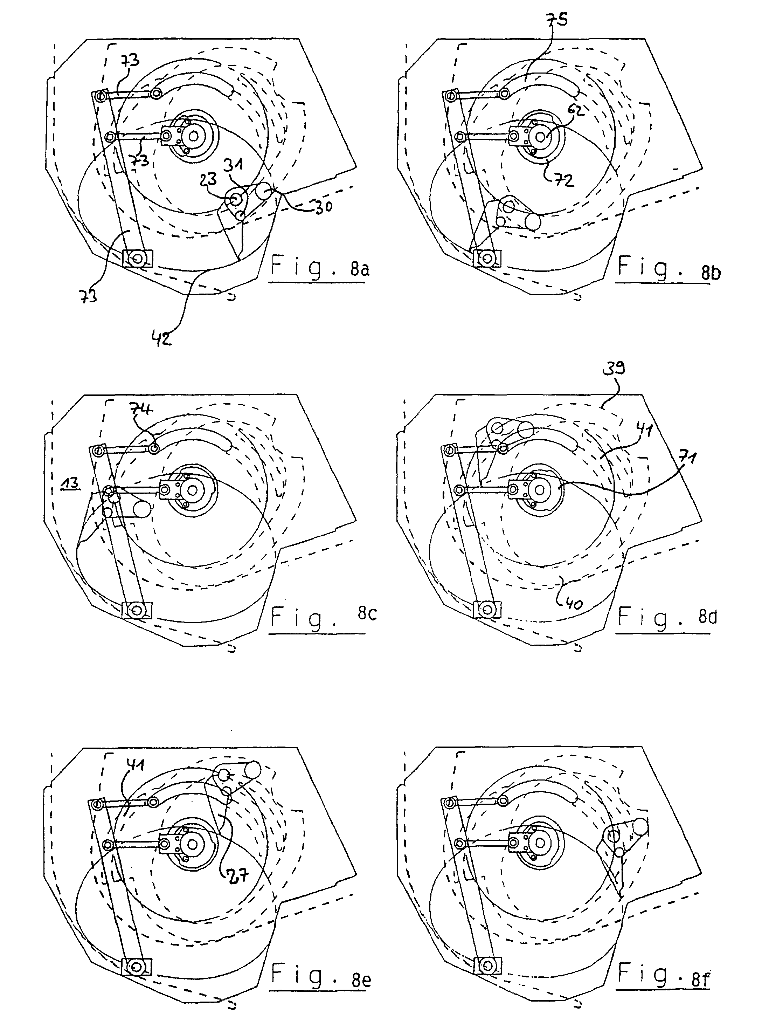

Im unverschwenkten Zustand der Kurvenbahn 39 befindet sich diese in Förderstellung und führt den Zubringerrechen 22 derart, daß dessen Zinken 27 eine Förderbewegung ähnlich der der Zinken 26 der Förderrechen 21 ausführen. In den Fig. 8a bis 8f ist der Bewegungsablauf der Zinken 27 des Zubringerrechens 22 in Förderstellung während einer Umdrehung des Rotors 16 in um jeweils 60° im Uhrzeigersinn weitergedrehten Bewegungsetappen gezeigt. Die dabei von den Zinkenspitzen der Zinken 27 beschriebene Hüllkurve 42 ist in diesen Figuren ebenfalls eingezeichnet. Sie unterscheidet sich erkennbar von der Hüllkurve 37 der Bewegung der Zinken 26 der Förderrechen 21, da die bewegbare Kurvenbahn 39 nicht für die Förderstellung, sondern für die Zubringerstellung optimiert ausgelegt ist.

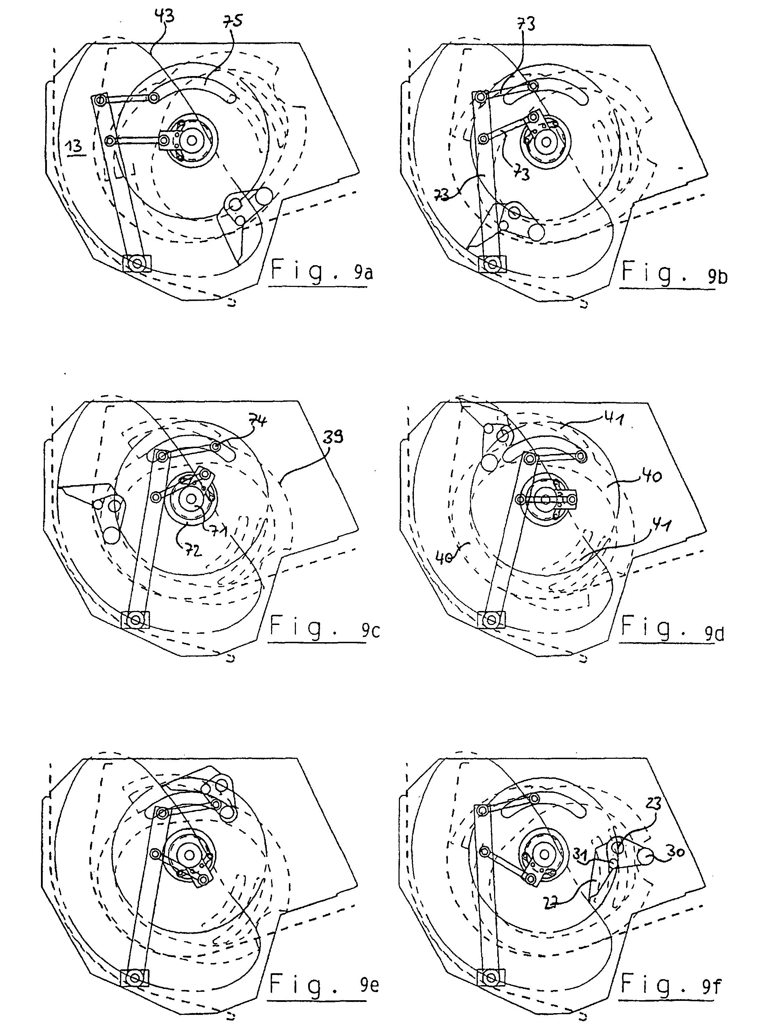

Die Bewegung der Zinken 27 des Zubringerrechens 22 in Zubringerstellung bei verschwenkter Kurvenbahn 39 ist in den Figuren 9a bis 9f dargestellt, worin die Bezugsziffer 43 die Hüllkurve der Zinkenspitzen in Zubringerstellung bezeichnet.

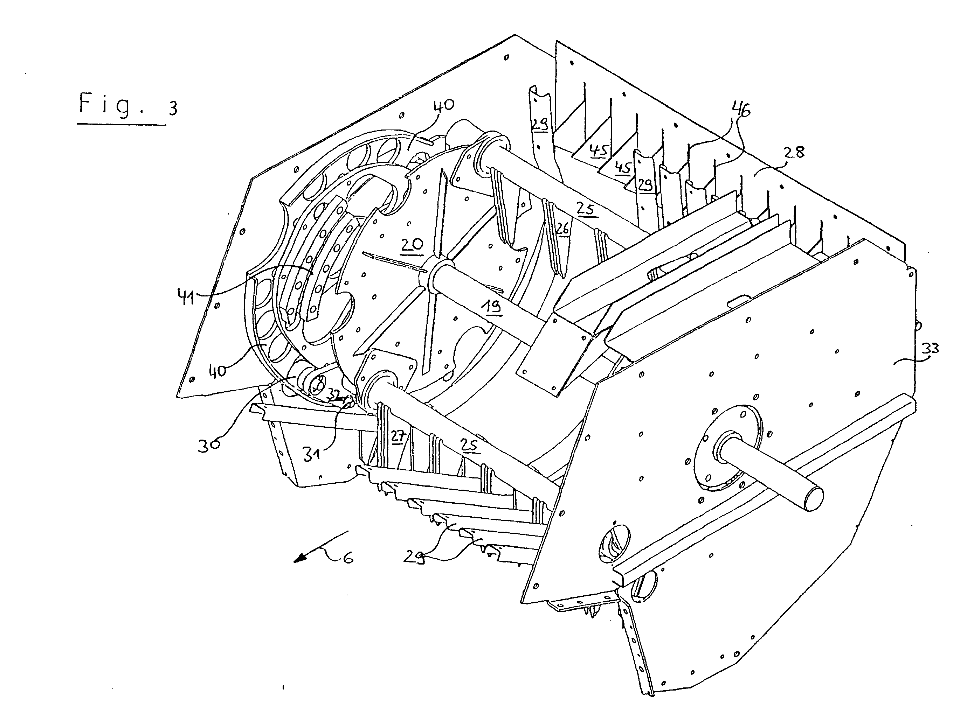

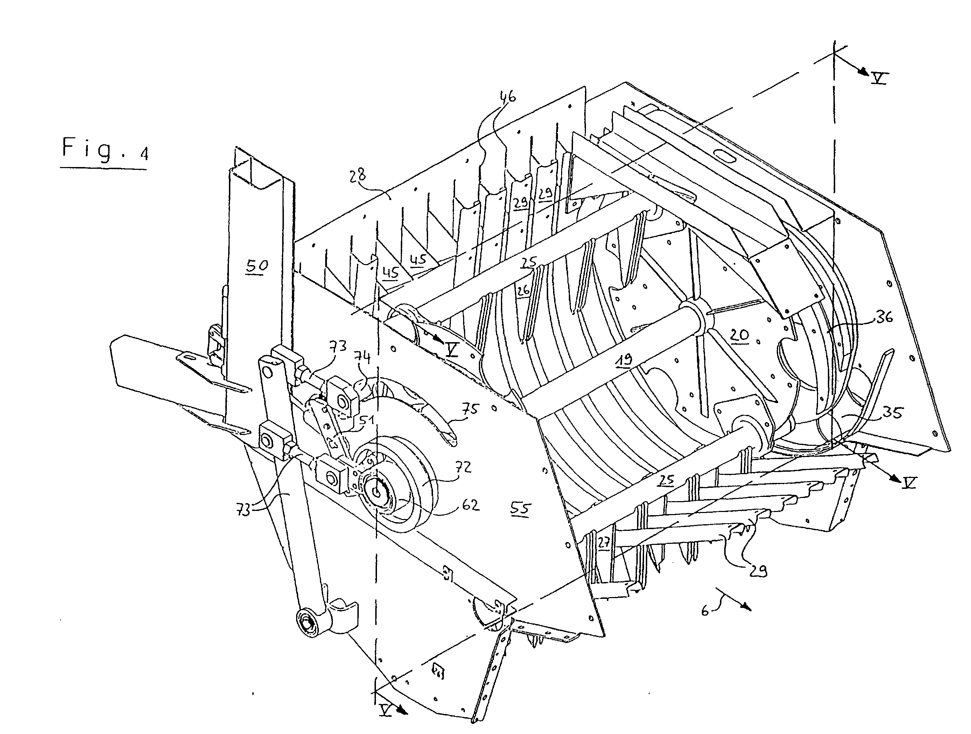

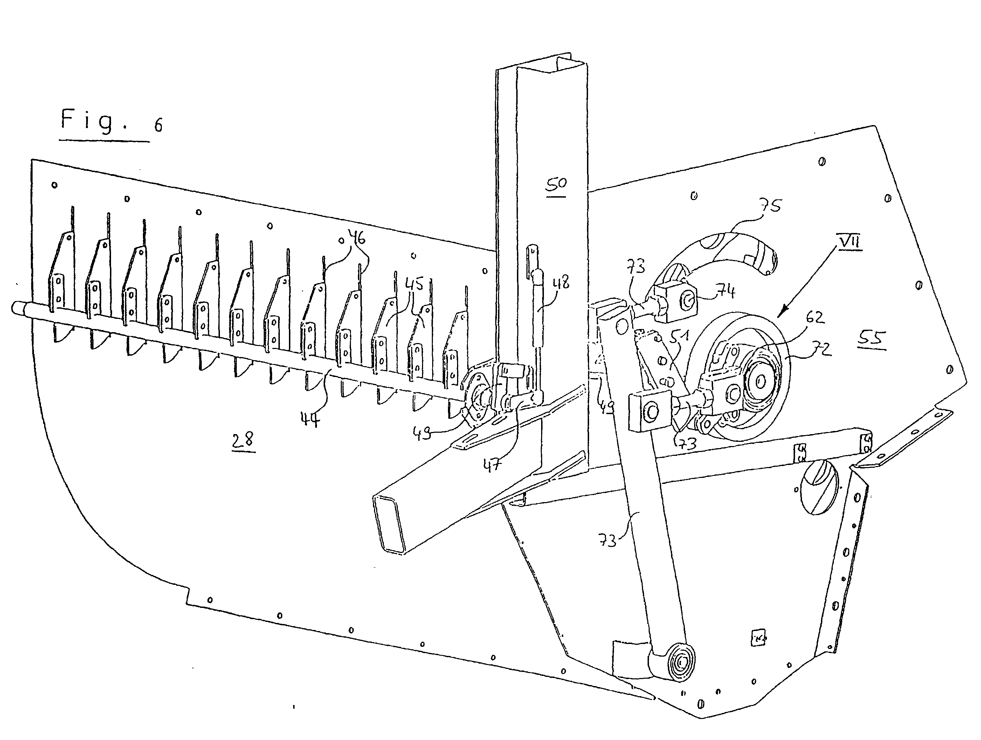

Die Steuerung der Verschwenkung der Kurvenbahn 39 in Abhängigkeit des Füllgrades des Zubringerkanals 13 erfolgt durch die im folgenden beschriebene Drucksensorvorrichtung. Dazu ist ein Rückhalter vorhanden, der unterhalb der Preßkanaleinlaßöffnung 12 angeordnet ist und eine sich in Fahrtrichtung 6 hinter dem Zuführkanal 13 erstreckende Haltewelle 44 aufweist, an der Halteplatten 45 befestigt sind, die durch in der äußeren Wandung 28 des Zubringerkanals 13 eingebrachte Schlitze 46 den Zubringerkanal 13 durchgreifen (sh. Fig. 3, 4 und insbesondere Fig. 6). Die Haltewelle 44 ist verdrehbar gelagert und über einen an dieser befestigten Hebelarm 47 mit einer Feder 48 verbunden, deren Kraft die Halteplatten 45 in der den Zubringerkanal 13 durchgreifenden Position hält. Wenn der Zubringerkanal 13 durch die Förderbewegung der Rechen 21, 22 soweit mit Erntegut gefüllt ist, daß der auf die Halteplatten 45 durch das Erntegut ausgeübte Druck die Kraft der Feder 48 übersteigt, dreht sich die Haltewelle 44 und die Halteplatten 45 schwenken aus dem Zubringerkanal 13 heraus und geben die Preßkanaleinlaßöffnung 12 frei. Dabei ist die kammartige Ausgestaltung des Rückhalters mit einer Vielzahl von Halteplatten 45 vorteilhaft, da diese eine verteilte Rückhaltekraft auf das Erntegut ausüben und dieses durchkämmend vergleichmäßigen, so daß über die gesamte Breite des Zubringerkanals 13 eine annähernd gleiche Menge Erntegut dem Preßkanal 11 zugeführt wird. Durch die Wahl der Federkraft der Feder 48, die durchaus auch verstellbar sein kann, läßt sich die bei jeder Zubringerbewegung dem Preßkanal 11 zugeführte Erntegutmenge beeinflussen.

Die Rückzugsbewegung der Halteplatten 45 des Rückhalters wird bei der dargestellten Ausführungsform allein durch den anstehenden Druck des Erntegutes bewirkt. Es ist aber auch möglich, bei durch den Druck des Erntegutes eingeleiteter Rückzugsbewegung den vollständigen Rückzug des Rückhalters aus dem Zubringerkanal 13 durch einen Antrieb zu unterstützen oder vollständig aktiv auszuführen, wodurch sich der vom Rückhalter auf das Erntegut ausgeübte Gegendruck vermindern ließe, was bei empfindlichem Erntegut von Vorteil sein kann.

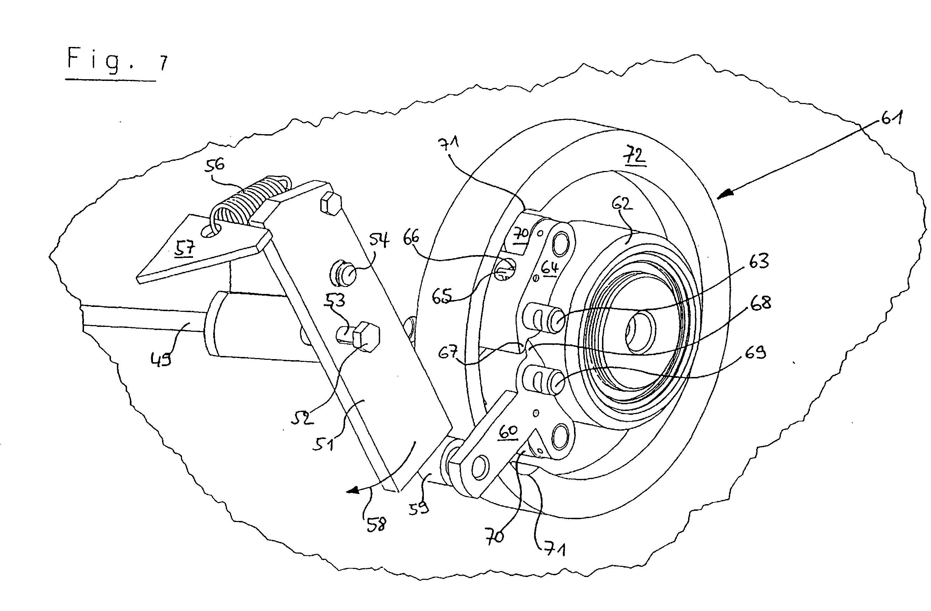

Mit der Haltewelle 44 ist neben dem Hebelarm 47 ein Schaltgestänge 49 verbunden, das sich durch einen Rahmenträger 50 der Aufsammelpresse hindurch erstreckt und mit einer Amboßklinke 51 in Wirkverbindung steht, indem ein Bolzen 52 des Schaltgestänges 49 in einem Langloch 53 der Amboßklinke 51 geführt ist. Das Langloch 53 erfüllt eine Pufferfunktion, so daß sich kleine Bewegungen des Schaltgestänges 49 nicht umittelbar auf die Amboßklinke 51 übertragen. Dies ist insbesondere in Fig. 7 erkennbar. Bei einer größeren Bewegung des Schaltgestänges 49, wie sie durch ein Hinausziehen der Halteplatten 45 aus dem Zubringerkanal 13 verursacht wird, führt das Zuggestänge 49 zu einer Verschwenkung der Amboßklinke 51 um einen Lagerbolzen 54, der mit der starren Seitenwand 55 des Rotorförderers verbunden ist. Gegen die Kraft einer Zugfeder 56, die über einen Anschlag 57 ebenfalls mit der Seitenwand 55 verbunden ist, schwenkt die Amboßklinke 51 in Richtung des Pfeiles 58 und gibt dadurch eine an der Amboßklinke 51 abgestützte Rolle 59 einer Schaltklinke 60 frei.

Die Schaltklinke 60 ist Teil einer Drehkupplung 61, die zu einer Synchronisierungseinrichtung gehört. Diese sorgt für eine Synchronisierung der Bewegung der beweglichen Kurvenbahn 39, und damit der Zubringerbewegung des Zubringerrechens 22, mit der Bewegung des Preßkolbens 9. Die Zubringerbewegung kann dadurch nur dann erfolgen, wenn der Preßkolben 9 die Preßkanaleinlaßöffnung 12 freigibt.

Dazu wird bei der dargestellten Ausführungsform der Rotor 16 von dem Hauptgetriebe 7 mit der gleichen Drehzahl angetrieben. Die Synchronisierungseinrichtung bewirkt, daß die Verschwenkung der bewegbaren Kurvenbahn 39, und damit die Zubringerbewegung des Zubringerrechens 22, nur bei einem vorgegebenen Drehwinkel des Rotors 16 eingeleitet wird. Dazu verfügt die Drehkupplung 61 über ein als Kupplungsglocke 72 ausgebildetes Kupplungselement, das fest mit der Rotorwelle 19 verbunden ist und sich ständig mit dieser dreht. Ein Kupplungsgegenelement umfaßt eine Kupplungsnabe 62, die Schaltklinke 60 und eine weitere Kupplungsklinke 64. Die Schaltklinke 60 ist auf der im ausgekuppelten Zustand feststehenden Kupplungsnabe 62 angebracht und wird durch die Abstützung mit der Rolle 59 auf der Amboßklinke 51 außerhalb eines Kupplungseingriffs 71 der Kupplungsglocke 72 gehalten. Über Kupplungsnasen 67, 68 wird dabei auch die zweite Kupplungsklinke 64 außerhalb des Kupplungseingriffs 71 der Kupplungsglocke 72 gehalten.

Gibt die Amboßklinke 51 die Rolle 59 der Schaltklinke 60 frei, so wird die Schaltklinke 60 durch eine Feder 66, die sich an einem Stift 65 in der Schaltklinke 60 gegen die Kupplungsnabe 62 abstützt, um einen Schwenkbolzen 69 in Richtung der Kupplungsglocke 72 geschwenkt und rastet mit einer Rolle 70 dann in den Kupplungseingriff 71 der Kupplungsglocke 72 ein, wenn diese während ihrer Umdrehung den der Schaltklinke 60 zugeordneten Drehwinkel erreicht hat. Erst mit dem Einschwenken der Schaltklinke 60 in den Kupplungseingriff 71 der Kupplungsglocke 72 wird über die Schaltnasen 67, 68 auch die Kupplungsklinke 64 mit ihrer Rolle 70 in den Kupplungseingriff 71 der Kupplungsglocke 72 eingeschwenkt. Somit wird eine Drehkupplung zwischen Kupplungsglocke 72 und Kupplungsnabe 62 erzielt, wobei die Schaltklinke 60 eine Mitnahme der Kupplungsnabe 62 mit der Kupplungsglocke 72 bewirkt und die Kupplungsklinke 64 ein Vorauseilen der Kupplungsnabe 62 gegenüber der Kupplungsglocke 72 verhindert. Sind Kupplungsnabe 62 und Kupplungsglocke 72 so verbunden, befindet sich die Drehkupplung 61 im eingekuppelten Zustand und die Kupplungsnabe 62 läuft mit der Kupplungsglocke 72 um. Dieser Bewegungsablauf ist in den Fig. 9a bis 9f dargestellt.

Die Kupplungsnabe 62 ist mit einer in Fig. 7 aus Gründen der Übersichtlichkeit nicht dargestellten Kurvenbahnbewegungsvorrichtung verbunden. Wie insbesondere Fig. 6, aber auch die Fig. 8 und 9 zeigen, weist die Kurvenbahnbewegungsvorrichtung eine Kurbelschwingenanordnung 73 auf, die eine Drehung der Kupplungsnabe 62 über einen Koppelbolzen 74 in eine Verschwenkung der bewegbaren Kurvenbahn 39 um die Rotorachse 18 umsetzt. Der Betrag des Schwenkwinkels der Kurvenbahn 39 und der Geschwindigkeitsverlauf der Schwenkbewegung sind durch die Gestellgrößen der Kurbelschwingenanordnung 73 festgelegt. Der Koppelbolzen 74 verbindet die bewegbare Kurvenbahn 39 mit der Kurbelschwingenanordnung 73, indem er durch eine Aussparung 75 in der Gehäusewand 55 hindurchgreift.

Die erfindungsgemäße Aufsammelpresse kann ferner über eine nicht dargestellte Anzeigevorrichtung verfügen, die anzeigt, ob sich die Drehkupplung 61 im eingekuppelten oder im ausgekuppelten Zustand befindet. Dadurch erhält die die Aufsammelpresse betreibende Person eine Information über den Auslastungsgrad der Presse. Läuft die Kupplungsglocke 72 der Drehkupplung 61 im ständig eingekuppelten Zustand um, so wird bei jeder Umdrehung des Rotors 16 durch den Zubringerrechen 22 eine Zubringerbewegung ausgeführt und die Presse ist gut ausgelastet. Setzt die Drehkupplung 61 hingegen zeitweise aus, d.h. ist sie bei manchen Umdrehungen ausgekuppelt, wird von der Pick-up 24 nicht genug Erntegut aufgenommen, um den Zubringerkanal 13 so schnell zu füllen, daß bei jeder Umdrehung des Rotors 16 eine Zubringerbewegung erfolgen kann.

Erfindungsgemäße Aufsammelpressen können auch so ausgestaltet sein, daß der Rotor 16 mit einem ganzzahligen Vielfachen der Bewegungsfrequenz des Preßkolbens 12 umläuft. Dadurch kann die Anzahl der Förderrechen 21 vermindert werden. Bei derartigen Pressen wird es jedoch nötig, die Synchronisierungseinrichtung mit einer zusätzlichen Schaltung zu versehen, die ein Einkuppeln nur bei einer vorgegebenen Position des Preßkolbens 9 ermöglicht. Andererseits kann der Rotor 16 auch mit einer einem Stammbruchteil, beispielsweise 1/2, 1/3, 1/4 etc., der Frequenz des Preßkolbens 9 umlaufen. Er muß dann eine entsprechend größere Zahl an Zubringerrechen 22 und eine entsprechende Anzahl an Kupplungseingriffen 71 in der Kupplungsglocke 72 oder Gegenelementen aufweisen. Durch die damit mögliche langsamere Bewegung des Rotors 16 lassen sich die auf die Rechen 21, 22 wirkenden Kräfte und der Verschleiß des Rotorförderers insgesamt vermindern.

## Patentansprüche

1. Aufsammelpresse für landwirtschaftliches Erntegut mit einem Preßkolben (9) und einem Rotorförderer, der um eine Rotordrehachse (18) rotierende, sich in etwa parallel zur Rotordrehachse (18) erstreckende Rechenachsen (23) aufweisende Rechen (21,22) umfaßt, die das Erntegut durch einen Zuführkanal (13) fördern, um ihre Rechenachsen (18) kurvengesteuert verschwenkbar sind und von denen wenigstens einer als Förderrechen (21) wirkt und die Verschwenkung zumindest eines weiteren, als Zubringerrechen (22) dienenden Rechens in Abhängigkeit des Füllgrades des Zuführkanals (13) derart steuerbar ist, daß er bei Erreichen eines vorgegebenen Füllgrades des Zuführkanals (13) das dort angesammelte Erntegut über eine Preßkanaleinlaßöffnung (12) in einen Preßkanal (11) fördert, **dadurch gekennzeichnet, daß** der Zubringerrechen (22) in einer aus einer Förderstellung in eine Zubringerstellung bewegbaren Kurvenbahn (39) geführt ist, wohingegen der Förderrechen (21) in einer unbeweglichen Kurvenbahn (34) geführt ist.

2. Aufsammelpresse nach Anspruch 1, **dadurch gekennzeichnet, daß** sie zur Ermittlung des Füllgrades des Zuführkanals (13) eine Drucksensorvorrichtung aufweist.

3. Aufsammelpresse nach Anspruch 2, **dadurch gekennzeichnet, daß** die Drucksensorvorrichtung einen kammartigen Rückhalter aufweist, der den Zuführkanal (13) zumindest teilweise durchsetzt.

4. Aufsammelpresse nach Anspruch 2 oder 3, **dadurch gekennzeichnet, daß** die Drucksensorvorrichtung wenigstens einen den Zuführkanal (13) im Bereich der Preßkanaleinlaßöffnung (12) zumindest teilweise durchgreifenden, aus dem Zuführkanal (13) zurückziehbaren Rückhalter aufweist, der mit einem Widerlagerelement so verbunden ist, daß die Rückzugsbewegung des Rückhalters aus dem Zuführkanal (13) erst bei Erreichen eines vorgegebenen Füllgrades des Zuführkanals (13) ausgelöst wird.

5. Aufsammelpresse nach Anspruch 4, **dadurch gekennzeichnet, daß** der Rückhalter mit einer gemeinsamen Haltewelle (44) schwenkbar verbundene Halteplatten (45) aufweist und das Widerlager durch zumindest eine mit der Haltewelle (44) verbundene, ihrer Verdrehung entgegenwirkende Feder (48) gebildet ist.

6. Aufsammelpresse nach einem der Ansprüche 1 bis 5, **gekennzeichnet durch** eine Synchronisierungseinrichtung, die die Bewegung der beweglichen Kurvenbahn (39) zur Bewegung des Preßkolbens (9) synchronisiert, so daß der Zubringerrechen (22) das angesammelte Erntegut dann in den Preßkanal (11) fördert, wenn sich der Preßkolben (9) in zurückgezogener, die Preßkanaleinlaßöffnung (12) freigebender Position befindet.

7. Aufsammelpresse nach Anspruch 6, wobei der Rotorförderer einen Rotor (16) aufweist, der mit dem Preßkolben (9) getriebemäßig derart gekoppelt ist, daß er bei jedem Kolbenhub eine ganze Umdrehung, ein ganzzahliges Vielfaches oder einen Stammbruchteil davon ausführt, **dadurch gekennzeichnet, daß** die Synchronisierungseinrichtung eine Drehkupplung (61) aufweist, durch die der Rotor (16) mit einer Kurvenbahnbewegungsvorrichtung verbindbar ist, wobei ein Kupplungselement drehfest mit dem Rotor (16) und ein Kupplungsgegenelement mit der bewegbaren Kurvenbahn (39) verbunden ist und beide Kupplungselemente so geformt sind, daß das Einkuppeln nach Auslösen der Drehkupplung (61) nur bei einem vorgegebenen Drehwinkel des Rotors (16) erfolgt.

8. Aufsammelpresse nach einem der Ansprüche 2 bis 5 und nach Anspruch 7, **dadurch gekennzeichnet, daß** die Drucksensorvorrichtung eine Steuereinrichtung aufweist, mittels der die Drehkupplung (61) auslösbar ist.

9. Aufsammelpresse nach Anspruch 7 oder 8, **dadurch gekennzeichnet, daß** die Kurvenbahnbewegungsvorrichtung eine Kurbelschwingenanordnung (73) aufweist, die die Bewegung der Drehkupplung (61) in eine Bewegung der bewegbaren Kurvenbahn (39) umsetzt.

10. Aufsammelpresse nach einem der Ansprüche 7 bis 9, **gekennzeichnet durch** eine mit der Drehkupplung (61) verbundende Anzeigevorrichtung, zur Anzeige des Einkupplungszustandes oder des Auskupplungszustandes.

## Claims

1. A pick-up baler for harvested crops, comprising a plunger (9) and a rotary conveyor which rotates about an axis of rotation of the rotor (18), and having rakes (21, 22) with their rake axes (23) extending approximately parallel to the axis of rotation of the rotor (18), which rakes feed the crop through a supply (13) channel, they being able to swivel about their axes (18) in a cam-controlled manner, at least one of them acting as a transporting rake (21), and the swiveling action of at least one other rake, serving as supply rake (22), may be controlled as a function of the amount of fill of the supply channel (13), so that, when a pre-set amount of fill of the supply channel (13) is reached, the crop accumulated there is delivered into a compression channel (11) through an inlet (12), **characterised in that** the supply rake (22) is guided in a cam track (39) that can move from a transport position into a supply position, whereas the transporting rake (21) is mounted in an immobile cam track (34).

2. A pick-up baler according to claim 1, **characterised by** a rotary sensing device, for detecting the amount of fill of the supply channel (13).

3. A pick-up baler according to claim 2, **characterized in that** the pressure-sensing device has a pectinate holdback, which passes through at least some of the supply channel (13).

4. A pick-up baler according to claim 2 or 3, **characterised in that** the pressure-sensing device has at least one holdback that moves into part of the supply channel (13) in the area of the compression channel inlet (12) and retracts out of it, being connected to a support element so that the retraction of the holdback out of the supply channel (13) is effected only when the pre-set amount of fill of the supply channel (13) has been reached.

5. A pick-up baler according to claim 4, **characterised in that** the holdback has retainer plates (45) pivoted to a common holding shaft (44), whereby the counteracting thrust is furnished by at least one spring (48) connected to the holding shaft (44).

6. A pick-up baler according to any one of claims 1 through 5, **characterised by** a synchronising device, which synchronises the movement of the cam track (39) for operating the plunger (9), so that supply rake (22) pushes the accumulated crop into the compression channel (11) when the plunger (9) is retracted and keeps open the compression channel inlet (12).

7. A pick-up baler according to claim 6, in which the rotary feeder has a rotor (16), geared to the plunger (9) so that on each stroke of the plunger it executes a full rotation, a whole number multiple, or a proper fraction thereof, **characterised in that** the synchronising device has a clutch (61), by means of which the rotor (16) can be connected to a cam operating mechanism, whereby one section is locked to the rotor (16), and the other section to the moving cam track (39), and whereby both coupling sections are shaped so that when the clutch (61) is disconnected, it is re-engaged only when the rotor (16) has reached a pre-determined angle of rotation.

8. A pick-up baler according to any one of claims 2 through 5, and claim 7, **characterised in that** the pressure-sensing device has a controller, by means of which the clutch (61) can be disengaged.

9. A pick-up baler according to claim 7 or 8, **characterised in that** the cam operating mechanism comprises a crank arrangement (73), which translates the movement of the clutch (61) to a movement of the cam track (39).

10. A pick-up baler according to any one of claims 7 through 9, **characterised by** an indicating device connected to the clutch (61), for displaying the connected or the disengaged state of the coupling.

## Revendications

1. Presse ramasseuse pour produit de récolte agricole présentant un piston de compression (9) et un transporteur à rotor qui comprend des râteaux (21,22) présentant des axes de râteau (23) s'étendant de façon presque parallèle par rapport à l'axe de rotation de rotor (18) et tournant autour d'un axe de rotation de rotor, râteaux qui transportent le produit de récolte à travers un canal d'amenée (13), peuvent pivoter autour de leurs axes de râteau (18) par une commande par cames et parmi lesquels au moins un fonctionne en tant que râteau de transport (21) et le pivotement d'au moins un autre râteau servant de râteau d'alimentation (22) peut être réglé en fonction du degré de remplissage du canal d'amenée (13) de sorte qu'il transporte, lorsqu'un degré de remplissage prédéterminé dans le canal d'amenée (13) est atteint, le produit de récolte y accumulé dans un canal de compression (11) via une ouverture d'admission (12) dans le canal de compression, **caractérisée en ce que** le râteau d'alimentation (22) est guidé dans un chemin à cames (39) pouvant se déplacer d'une position de transport à une position d'alimentation, alors que le râteau de transport (21) est guidé dans un chemin à cames immobile (34).

2. Presse ramasseuse selon la revendication 1, **caractérisée en ce qu'**elle présente un dispositif de détection de pression afin de déterminer le degré de remplissage dans le canal d'amenée (13).

3. Presse ramasseuse selon la revendication 2, **caractérisée en ce que** le dispositif de détection de pression présente un élément de retenue en forme de peigne qui traverse au moins partiellement le canal d'amenée (13).

4. Presse ramasseuse selon la revendication 2 ou 3, **caractérisée en ce que** le dispositif de détection de pression présente au moins un élément de retenue pouvant être retiré du canal d'amenée (13) et pénétrant au moins partiellement le canal d'amenée (13) dans la zone de l'ouverture d'admission dans le canal de compression (12), élément de retenue qui est raccordé à un élément formant butée de sorte que le mouvement de retrait de l'élément de retenue depuis le canal d'amenée (13) se déclenche seulement lorsqu'un degré de remplissage déterminé dans le canal d'amenée (13) est atteint.

5. Presse ramasseuse selon la revendication 4, **caractérisée en ce que** l'élément de retenue présente des plaques de maintien (45) raccordées de façon à pouvoir pivoter à un arbre de maintien commun (44) et la butée est formée par au moins un ressort (48) raccordé à l'arbre de maintien (44) et contrariant sa rotation.

6. Presse ramasseuse selon l'une quelconque des revendications 1 à 5, **caractérisée en ce qu'**un dispositif de synchronisation qui synchronise le mouvement du chemin à cames mobile (39) avec celui du piston de compression (9) de sorte que le râteau d'alimentation (22) transporte le produit de récolte accumulé dans le canal de compression (11) lorsque le piston de compression (9) se trouve dans une position de retrait libérant l'ouverture d'admission (12) dans le canal de compression.

7. Presse ramasseuse selon la revendication 6, dans laquelle le transporteur à rotor présente un rotor (16) qui est couplé au piston de compression (9) par engrenage de sorte qu'à chaque course de piston il exécute une rotation complète, un multiple en nombre entier ou une fraction primitive de celle-ci, **caractérisée en ce que** le dispositif de synchronisation présente un joint rotatif (61) par lequel le rotor (16) peut être raccordé à un dispositif de mise en mouvement d'un chemin à cames, un élément d'accouplement étant raccordé sans tourner au rotor (16) et un élément opposé d'accouplement étant raccordé au chemin à cames mobile (39) et les deux éléments d'accouplement étant formés de sorte que l'embrayage après débrayage du joint rotatif (61) s'effectue seulement à un angle de rotation prédéterminé du rotor (16).

8. Presse ramasseuse selon l'une quelconque des revendications 2 à 5 et selon la revendication 7, **caractérisée en ce que** le dispositif de détection de pression présente un équipement de commande au moyen duquel le joint rotatif (61) peut être débrayé.

9. Presse ramasseuse selon la revendication 7 ou 8, **caractérisée en ce que** le dispositif de mise en mouvement de chemin à cames présente une disposition à bielle oscillante (73) qui transforme le mouvement du joint rotatif (61) en un mouvement du chemin à cames mobile (39).

10. Presse ramasseuse selon l'une quelconque des revendications 7 à 9, **caractérisée par** un dispositif d'affichage raccordé au joint rotatif (61) afin d'afficher un état d'embrayage ou de débrayage.
